# EUROPEAN PATENT APPLICATION

(11) **EP 3 249 345 A1**
(43) Date of publication of application: **29.11.2017**
(21) Application number: 15878933.9
(22) Date of filing: 16.12.2015
(51) Int. Cl.: G01B 7/06, G01B 21/08

(54) **CONTAINER WALL THICKNESS INSPECTION DEVICE**

(30) Priority: 21.01.2015 JP 2015009424
(71) Applicant: Nihon Yamamura Glass Co., Ltd., Amagasaki-shi, Hyogo 660-8580 (JP)
(72) Inventor: TAMBO, Goro, Amagasaki-shi Hyogo 660-8580 (JP); TANAKA, Naohiro, Amagasaki-shi Hyogo 660-8580 (JP)
(74) Representative: Manitz Finsterwald Patentanwälte PartmbB
(86) International application number: PCT/JP2015/085150
(87) International publication number: WO 2016/117244

(57) **Abstract**

This invention relates to a container wall thickness inspection device 1 for inspecting a container 10A in which regions with a relatively greater wall thickness (flat portion Rf) and regions with a relatively smaller wall thickness (corner portion Rc) are distributed in the circumferential direction, the container wall thickness inspection device 1 comprising: a wall thickness measurement device (electrostatic capacity detector 4) with a sensor unit 5 for measuring a wall thickness of a site facing the sensor unit 5 on the outer peripheral surface of the container 10A; a rotary drive mechanism for axially rotating the container 10A around the central axis of the container in order to measure a wall thickness of the container over the entire circumference by the wall thickness measurement device; a region detection device (photoelectric sensor 8) for detecting which region of the container 10A corresponds to the site being measured for its wall thickness by the wall thickness measurement device; and a determination device for making a pass/fail determination with respect to the wall thickness of the container 10A based on measured wall thickness values over the entire circumference of the container 10a, which are obtained from outputs of the wall thickness measurement device. The determination device comprises a storage unit for storing a pass/fail determination standard value with respect to the wall thickness for each region, and a comparison unit for comparing each measured wall thickness value obtained from the outputs of the wall thickness measurement device with a pass/fail determination standard value stored in the storage unit corresponding to the region detected by the region detection device.

## Description

### Technical Field

The present invention relates to a wall thickness inspection device for inspecting the wall thickness of a container, such as a bottle. In particular, the present invention relates to a container wall thickness inspection device suitable for inspecting a container in which regions with a relatively greater wall thickness and regions with a relatively smaller wall thickness are distributed in the circumferential direction.

### Background Art

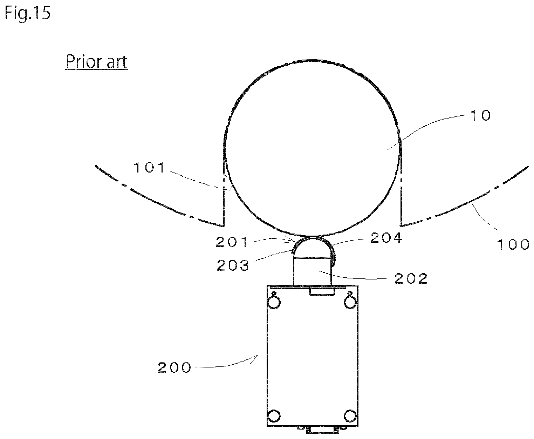

For example, in a bottle manufacturing plant, bottles are successively manufactured in a plurality of bottle making machine sections. While being conveyed to the wrapping process, which is the final stage, the bottles pass through inspection lines, and inspections for the presence or absence of defects and so forth are carried out. An example of a bottle inspection device installed in this type of inspection line has a structure in which a plurality of inspection stations are arranged around a star wheel. As shown in Fig. 15, a star wheel 100 is provided with a plurality of recesses 101 on the outer peripheral surface, and a bottle 10 introduced into each recess 101 is sequentially fed to each inspection station in accordance with the intermittent rotation of the star wheel 100. In an inspection station for inspecting the wall thickness of the bottle 10, the bottle 10 to be inspected is supported by the upper surface of a support table, and the wall thickness of the bottle 10 is measured over the entire periphery thereof by a wall thickness measurement device 200 by axially rotating the bottle 10 around its central axis using a rotary drive mechanism.

The wall thickness measurement device 200 shown in Fig. 15 is constituted of an electrostatic capacity detector. The electrostatic capacity detector has a sensor unit 201 with an electrode pattern on its front surface and an elastic body 202 for pushing the sensor unit 201 onto the outer peripheral surface of the bottle 10. The sensor unit 201 is formed by bonding an electrode sheet 204 made of a synthetic resin, which has an electrode pattern, to the surface of a belt-like attachment substrate 203 curved over the entire length. By bringing the sensor unit 201 into contact with the surface of the bottle 10, the electrostatic capacity of the portion in contact with the bottle 10 is detected between the electrode pattern of a measuring electrode and the electrode pattern of an earth electrode. The output of the detected electrostatic capacity is sent to an arithmetic and control unit (not shown) to be converted to a wall thickness (see, for example, Patent Document 1).

The arithmetic and control unit compares the wall thickness measurement value obtained by the conversion with a predetermined pass/fail determination standard value, thereby determining whether the wall thickness of the bottle 10 is acceptable (pass or fail). The pass/fail determination standard value represents a minimum thickness required to ensure the bottle strength. If even one of the measurement values among the entire bottle periphery fall below the pass/fail determination standard value, the bottle is determined to be a defective product.

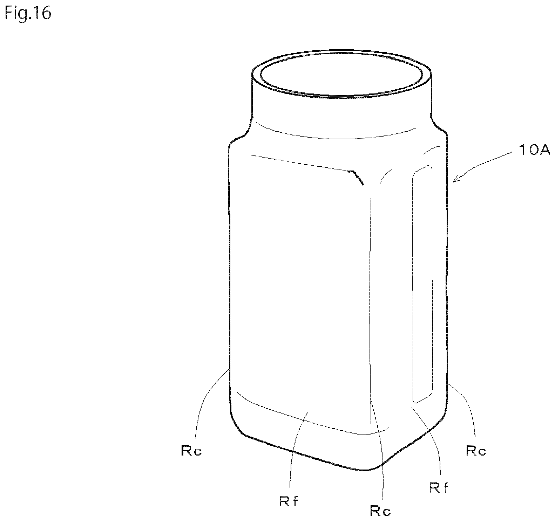

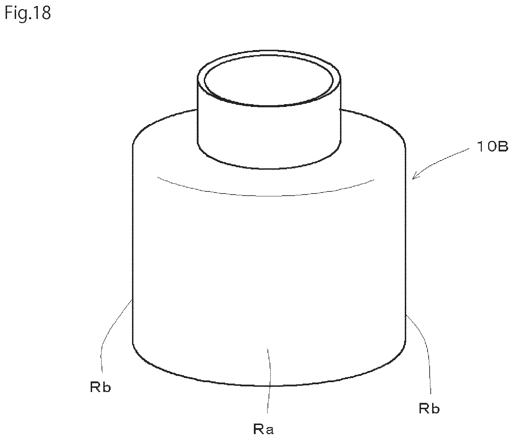

In the wall thickness measurement device 200 having the above structure, if the bottle 10 is vibrated, the elastic body 202 absorbs the vibration to stably maintain the contact state between the sensor unit 201 and the surface of the bottle 10, thereby enabling the wall thickness measurement to be carried out with high accuracy. Further, when a wall thickness is measured with respect to a bottle in which the body has no uniform degree of curvature in the circumferential direction, such as a bottle 10A having a body with a square shape (hereinafter referred to as a "square bottle") as shown in Fig. 16 or a bottle 10B having a body with an ellipse shape (hereinafter referred to as an "ellipse bottle") as shown in Fig. 18, it is possible to carry out an accurate measurement by using a wall thickness measurement device having a structure in which the contact position of the sensor unit with respect to the outer periphery of the bottle 10 is stable, such as the devices disclosed in Patent Documents 2 and 3.

### Citation List

### Patent Documents

Patent Document 1: Patent No. 3416084
Patent Document 2: JP2013-195110A
Patent Document 3: WO2014/050782

### Summary of Invention

### Technical Problem

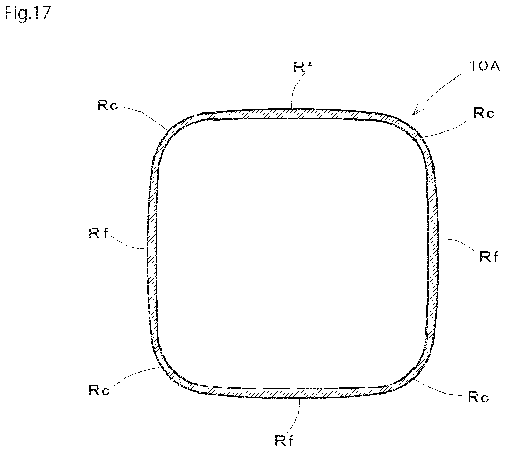

As shown in Figs. 16 and 17, the square bottle 10A has a structure such that the wall thickness of a corner portion (hereinafter referred to as a corner portion) Rc with a large degree of curvature is smaller than the wall thickness of a substantially flat portion Rf (hereinafter referred to as a flat portion), which is almost flat with a small degree of curvature. In such a square bottle 10A, if the pass/fail determination standard value (smallest value) is set based on the corner portion Rc having a small thickness, when the flat portion Rf of the bottle to be inspected is locally thin, the defective portion may not be discovered if the thickness of the thin portion is greater than the standard value. On the other hand, if the pass/fail determination standard value is set based on the flat portion Rf having a large thickness, the allowable thickness of the corner portion Rc decreases; as a result, the frequency of a determination as a defective product excessively increases.

In the ellipse bottle 10B shown in Fig. 18, the wall thickness of the second region Rb with a large degree of curvature is smaller than the wall thickness of the first region Ra with a small degree of curvature; therefore, the same problem as that of the square bottle 10A occurs.

The present invention was made in view of the problem described above, and an object of the invention is to provide a container wall thickness inspection device capable of performing a thickness inspection with high accuracy even for a container in which regions with a relatively greater wall thickness and regions with a relatively smaller wall thickness are distributed in the circumferential direction, such as a square bottle or an ellipse bottle.

### Solution to Problem

The container wall thickness inspection device of the present invention is a device for inspecting a container in which regions with a relatively greater wall thickness and regions with a relatively smaller wall thickness are distributed in the circumferential direction, the container wall thickness inspection device comprising a wall thickness measurement device with a sensor unit for measuring a wall thickness of a site facing the sensor unit on the outer peripheral surface of the container; a rotary drive mechanism for axially rotating the container around the central axis of the container in order to measure a wall thickness of the container over the entire circumference by the wall thickness measurement device; a region detection device for detecting which region of the container corresponds to the site being measured for its wall thickness by the wall thickness measurement device; and a determination device for making a pass/fail determination with respect to the wall thickness of the container based on measured wall thickness values over the entire circumference of the container, which are obtained from outputs of the wall thickness measurement device, wherein: the determination device comprises a storage unit for storing a pass/fail determination standard value with respect to the wall thickness for each region, and a comparison unit for comparing each measured wall thickness value obtained from the outputs of the wall thickness measurement device with a pass/fail determination standard value stored in the storage unit corresponding to the region detected by the region detection device.

For example, when the wall thickness of a square bottle is inspected by the container wall thickness inspection device having the above structure, the first pass/fail determination standard value based on the wall thickness of the flat portion and the second pass/fail determination standard value based on the wall thickness of the corner portion are stored in the storage unit in advance. When the wall thickness over the entire circumference of a square bottle is measured by the wall thickness measurement device during the inspection, the region detection device detects whether the measurement site is a flat portion or a corner portion. The measurement value of the wall thickness of a flat portion is compared with the first pass/fail determination standard value. The measurement value of the wall thickness of a corner portion is compared with the second pass/fail determination standard value. In this manner, the wall thickness inspection is performed based on the pass/fail determination standard values suitable for both the region with a relatively large wall thickness and the region with a relatively small wall thickness. Therefore, the inspection accuracy increases.

In a preferred embodiment of the present invention, the wall thickness measurement device comprises a sensor unit with an electrode pattern for measuring the electrostatic capacity of the container by being brought in contact with the outer peripheral surface of the container; and an elastic body for pushing the sensor unit onto the outer peripheral surface of the container. The region detection device detects a predetermined amount of displacement of the sensor unit during a reciprocating motion of the sensor unit along with an extension/compression motion of the elastic body, thereby detecting which region of the container corresponds to the site being measured for its wall thickness by the wall thickness measurement device.

For example, when a square bottle is inspected, since a corner portion of the square bottle has a greater distance from the center of the bottle than a flat portion, when the sensor unit comes in contact with the corner portion, the contraction degree of the elastic body is greater than the contraction degree when the sensor unit comes in contact with the flat portion, thereby retreating the sensor unit. By detecting the predetermined amount of displacement of the sensor unit by the region detection device, determination as to whether the measurement site is a flat portion or a corner portion can be carried out.

In a more preferred embodiment of the present invention, the wall thickness measurement device comprises a sensor unit with an electrode pattern for measuring the electrostatic capacity of the container by being brought in contact with the outer peripheral surface of the container; and an elastic body for pushing the sensor unit onto the outer peripheral surface of the container, the region detection device comprises a light-emitting unit and a light-receiving unit of a photoelectric sensor, which are oppositely positioned with the elastic body in the center, the light-emitting unit and the light-receiving unit of the photoelectric sensor being positioned so that a blocking state or a transmission state is formed in a light path between the light-emitting unit and the light-receiving unit by the predetermined amount of displacement of the sensor unit during the reciprocating motion of the sensor unit along with the extension/compression motion of the elastic body, and the region detection device detects which region of the container corresponds to the site being measured for its wall thickness by the wall thickness measurement device by detecting which of the blocking state and the transmission state is being formed in the light path between the light-emitting unit and the light-receiving unit.

In the above embodiment, for example, when the sensor unit comes in contact with a flat portion of the square bottle, the sensor unit turns the light path between the light-emitting unit and the light-receiving unit to a blocking state in which the light is blocked. In contrast, when the sensor unit comes in contact with a corner portion, the sensor unit makes a predetermined amount of displacement by contracting the elastic body, thereby turning the light path to a transmission state in which the light is transmitted. By detecting which of the blocking state and the transmission state is formed in the light path between the light-emitting unit and the light-receiving unit, it is determined whether the site being measured for the wall thickness is a flat portion or a corner portion of the square bottle.

### Advantageous Effects of Invention

The present invention compares the measured value of wall thickness of a measurement site with a pass/fail determination standard value set for each region, thereby making it possible to carry out a highly accurate wall thickness inspection over the entire periphery even for a container in which the degree of wall thickness relatively varies in different regions, such as a square bottle or an ellipse bottle.

### Brief Description of Drawings

Fig. 1 is a front view illustrating the schematic structure of a container wall thickness inspection device according to an embodiment of the present invention.
Fig. 2 is a front view illustrating the structure of an electrostatic capacity detector.
Fig. 3 is an enlarged cross-sectional view illustrating the structure of a sensor unit in an electrostatic capacity detector.
Fig. 4 is a plan view illustrating an electrode pattern formed on an electrode sheet.
Fig. 5 is an enlarged perspective view illustrating a state where an electrode sheet is bonded to an attachment substrate.
Fig. 6 is a cross-sectional view taken along the line A-A in Fig. 5.
Fig. 7 is a plan view showing a method for detecting the region of a wall thickness measurement site.
Fig. 8 is a block diagram illustrating the main structure of an arithmetic and control unit.
Fig. 9 is a graph showing a wall thickness conversion curve for converting the electrostatic capacity detected by an electrostatic capacity detector to wall thickness.
Fig. 10 is a time chart showing a change in wall thickness data, together with a corner detection signal and a gate signal.
Fig. 11 is an explanatory view showing a method for correcting ON time of the corner detection signal.
Fig. 12 is a flow chart showing procedures to inspect the wall thickness of a square bottle.
Fig. 13 is a flow chart showing detailed procedures of step ST7 in Fig. 12.
Fig. 14 is an explanatory view showing the structure of another embodiment of an electrostatic capacity detector, and a method for detecting the region of a wall thickness measurement site in the embodiment.
Fig. 15 is a plan view illustrating a structure example of an electrostatic capacity detector used for a previously known bottle wall thickness inspection device.
Fig. 16 is a perspective view illustrating an example of a square bottle.
Fig. 17 is a cross-sectional view in the horizontal direction showing the wall thickness of the square bottle of Fig. 16.
Fig. 18 is a perspective view illustrating an example of an ellipse bottle.

### Description of Embodiments

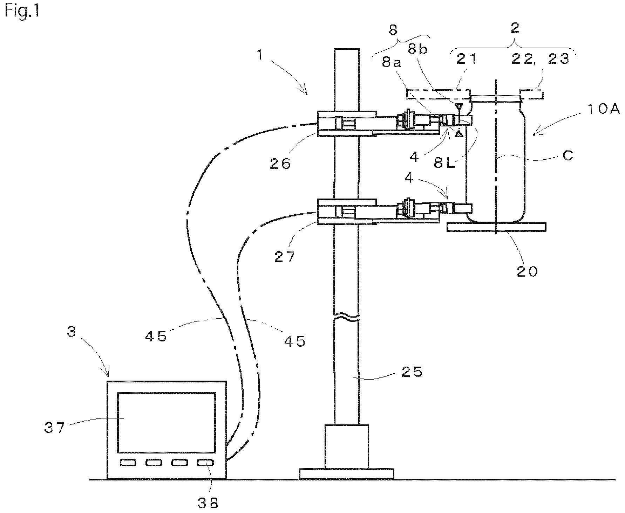

Fig. 1 illustrates the entire structure of a wall thickness inspection device 1 as an embodiment of the present invention. The wall thickness inspection device 1 shown in the figure is used to inspect the wall thickness of a glass bottle; however, the wall thickness inspection device 1 is not limited to this use and can also be used to inspect the wall thickness of a synthetic resin bottle. The wall thickness inspection device 1 is also capable of inspecting the wall thickness of various containers, in addition to bottles.

The wall thickness inspection device 1 shown in the figure inspects a square bottle 10A shown in Fig. 16, which is placed at one of multiple inspection stations provided around a star wheel (not shown). The illustrated wall thickness inspection device 1 is suitable for wall thickness inspection of the square bottle 10A, and is also suitable for wall thickness inspection of an ellipse bottle 10B shown in Fig. 18. Further, the body shape of the square bottle 10A is not limited to a planarly-viewed quadrilateral, and examples of the shape also include pentagons and hexagons. A plurality of recesses are provided on the outer peripheral surface of the star wheel. The square bottle 10A (hereinafter, simply referred to as a "bottle") introduced into a recess is subsequently fed to each inspection station in accordance with the intermittent rotation of the star wheel, while being restrained in the recess.

In an inspection station where the wall thickness inspection device 1 is installed, the bottle 10A to be inspected is held at the rotation center of a horizontal and freely rotatable support table 20. The bottle 10A is axially rotated around the central axis c of the bottle 10A by a rotary drive mechanism 2, thereby inspecting the wall thickness of the bottle 10A over the entire periphery. The rotary drive mechanism 2 in the illustrated example is constituted of the support table 20, a drive roller 21 brought into contact with the outer peripheral surface of the mouth of the bottle 10A for rotating the bottle 10A with a frictional force during the rotation, a pair of driven rollers 22 and 23 for holding the mouth of the bottle 10A between the drive roller 21 and themselves, and a drive device (not shown) for rotating the drive roller 21. The rotary drive mechanism 2 may directly rotate the support table 20.

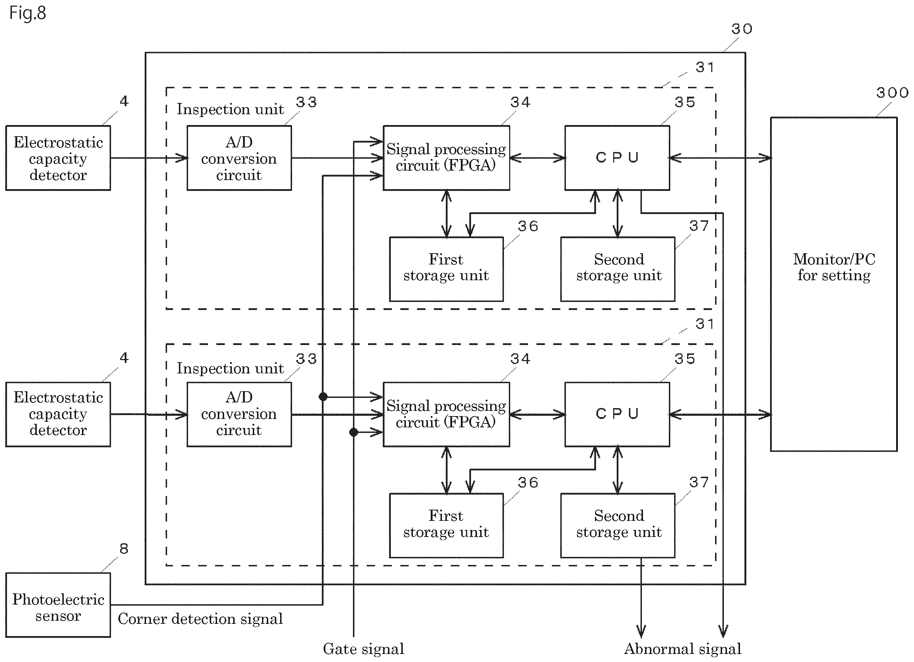

The wall thickness inspection device 1 according to the present embodiment carries out the inspection by measuring the wall thickness of the bottle 10A concurrently at two positions, i.e., the upper portion and the lower portion of the body, using a pair of electrostatic capacity detectors 4, 4 that constitute the wall thickness measurement device. The electrostatic capacity detectors 4, 4 are respectively fixed to fixing tables 26 and 27 that are provided liftably along a mounting stand 25, and are electrically connected to a device body 3 in which an arithmetic and control unit 30 is installed (see Fig. 8) via wire cords 45, 45. The wall thickness may also be measured at a single position or three or more positions.

A monitor unit 37 for displaying various types of data, such as inspection results, a plurality of key switches 38, and the like are provided on the front face of the device body 3. The arithmetic and control unit 30 is connected to a personal computer 300 (see Fig. 8) for setting the inspection conditions and confirming the inspection results.

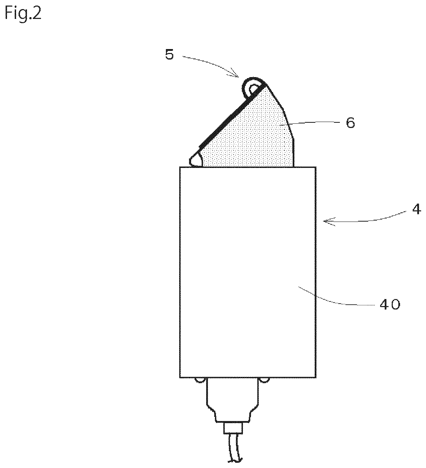

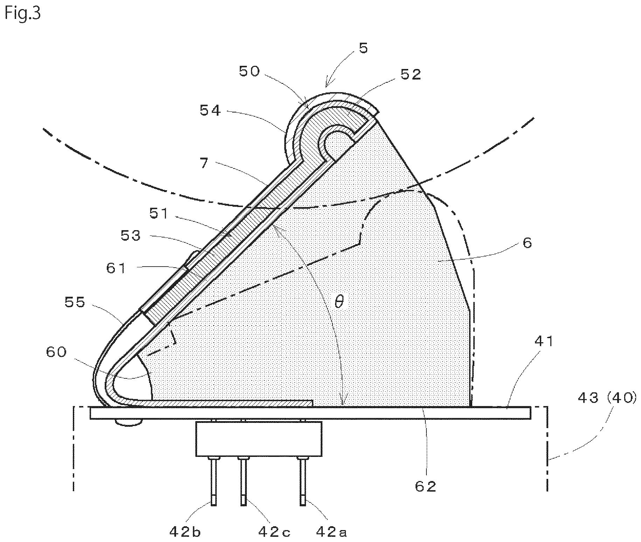

The electrostatic capacity detector 4 according to the present embodiment is used to detect the electrostatic capacity in the site in contact with the bottle 10A, which axially rotates on the support table 20. As shown in Figs. 2 and 3, the electrostatic capacity detector 4 is constituted of a sensor unit 5, which is brought into contact with the surface of the bottle 10A, an elastic body 6 for biasing the sensor unit 5 toward the surface of the bottle 10A to push the sensor unit 5 onto the surface, and a detector main body 40. The detector main body 40 has a built-in electrostatic capacity detection circuit. The electrostatic capacity detection circuit is electrically connected, via a printed circuit board 41 and three connector pins 42a to 42c, to the electrode pattern (details are described later) formed on a synthetic resin electrode sheet, which constitutes the sensor unit 5.

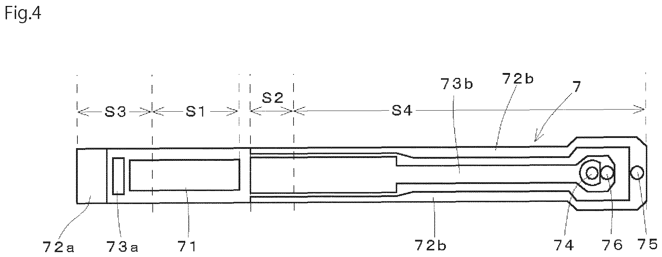

The sensor unit 5 has a curved surface 50 having a predetermined radius of curvature R. The curved surface 50 of the sensor unit 5 is covered with a protective film 54 for protecting the electrode sheet 7. The curved surface 50 is formed by bending a flexible electrode sheet 7 into an arc shape and attaching the bent electrode sheet 7 so that an electrode pattern 71 of a measurement electrode (described later) is located at the surface of the curved portion 52. In order to increase the accuracy of the measurement of the wall thickness of the square bottle 10A, it is necessary to minimize the variation in contact position of the outer peripheral surface of the bottle 10A with the curved portion 52. Therefore, the radius of curvature R of the curved surface 50 is set within a range of 2 mm≤R≤10 mm. As shown in Fig. 4, the electrode sheet 7 is formed into a belt-like shape and has a constant width over almost the entire length, and is adhered to both the front side and the back side of the curved portion 52 and a flat portion 53 of the attachment substrate 51.

The elastic body 6 is formed of a fan-shaped sponge or open-cell foam having a constant thickness. When a pressing force is exerted on the curved surface 50 of the sensor unit 5, the pivot of the fan serves as a fulcrum 60, and the whole elastic body 6 contracts so that the angle θ created by both side end surfaces 61 and 62 with the fulcrum 60 as its center is decreased. The attachment substrate 51 is adhered to a first side end surface 61 of the elastic body 6 with the sensor unit 5 facing outside. A second side end surface 62 of the elastic body 6 is adhered to the upper surface of a belt-like printed circuit board 41. The printed circuit board 41 is attached to an opening of a case body 43 constituting a detector main body 40.

As shown in Fig. 4, the electrode sheet 7 has an electrode pattern of a measurement electrode (hereinafter, referred to as a "measurement electrode pattern") 71 and electrode patterns of an earth electrode (hereinafter, referred to as "earth electrode patterns") 72a and 72b. Further, in this embodiment, Fig. 4 shows electrode patterns of a guard electrode (hereinafter, referred to as "guard electrode patterns") 73a and 73b for suppressing the influence of electrostatic capacity other than that of the bottle 10A.

In Fig. 4, S1 is the region to be positioned and fixed to the front surface of the curved portion 52 of the attachment substrate 51, and only the measurement electrode pattern 71 is present in this region S1. S2 is the region positioned and fixed along the back surface of the curved portion 52, and the guard electrode pattern 73b and the earth electrode patterns 72b, 72b, which sandwich the guard electrode pattern 73b, are present in this region S2. S3 is a region positioned and fixed to the front surface of the flat portion 53 of the attachment substrate 51, and the measurement electrode pattern 71, the guard electrode pattern 73a, and the earth electrode pattern 72a are present in this region S3. S4 is a region fixed along the back surface of the flat portion 53 of the attachment substrate 51 and along the front surface of the printed circuit board 41. The guard electrode pattern 73b and the earth electrode patterns 72b, 72b, which sandwich the guard electrode pattern 73b, are present in this region S4. Further, connection patterns 74 to 76 electrically connected to three connector pins 42a to 42c are formed at the end of this region S4.

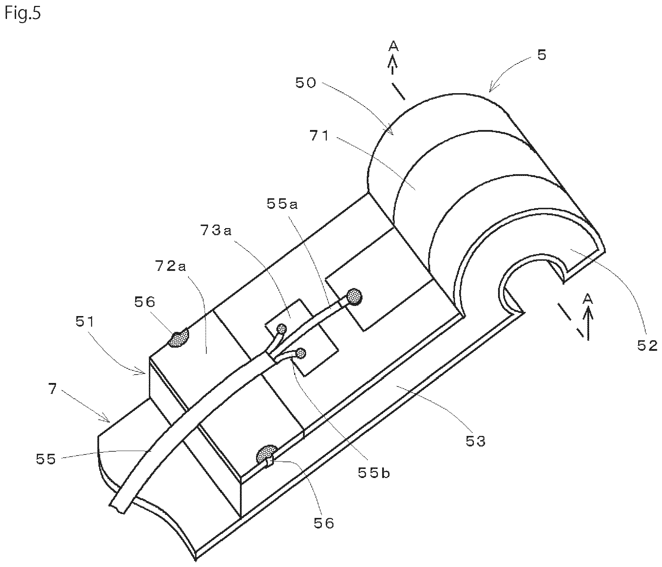

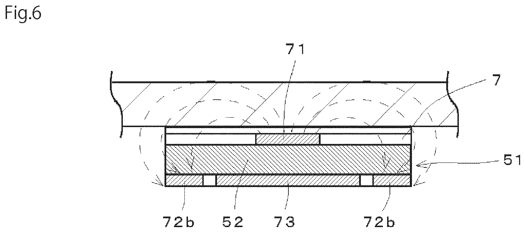

In the curved portion 50 of the sensor unit 5, as shown in Fig. 5, the measurement electrode pattern 71 is located in the center of the width. Further, the earth electrode pattern 72b is located on the back side of the curved portion 50, i.e., at both side edges on the back surface of the curved portion 52 of the attachment substrate 51. With this structure, as shown with the dotted lines in Fig. 6, lines of electric force are generated from the measurement electrode pattern 71 toward the earth electrode pattern 72b, and electrical charges corresponding to the thickness of the glass portion in contact with the measurement electrode pattern 71 are stored.

Lead wires 55a and 55b are connected to the measurement electrode pattern 71 and the guard electrode pattern 73a of the electrode sheet 7 positioned at the flat portion 53 of the attachment substrate 51. The two lead wires 55a and 55b are bundled together as a single lead wire 55, which is guided to the back surface of the printed circuit board 41, and is electrically connected to a conductive pattern (not shown) printed on the back surface of the printed circuit board 41. Further, the earth electrode pattern 72a on the flat portion 53 of the attachment substrate 51 is electrically connected to the earth electrode patterns 72b, 72b at both sides on the back surface via conductive wires 56, 56. The conductive pattern on the back surface of the printed circuit board 41 and the connection patterns 74 to 76 of the electrode sheet 7 are electrically connected to the connector pins 42a to 42c. Each of the connector pins 42a to 42c is connected to a connector (not shown) incorporated inside the detector main body 40. Thereby, the measurement electrode pattern 71, the earth electrode patterns 72a and 72b, and the guard electrode patterns 73a and 73b of the electrode sheet 7 are electrically connected to the electrostatic capacity detection circuit embedded in the detector main body 40.

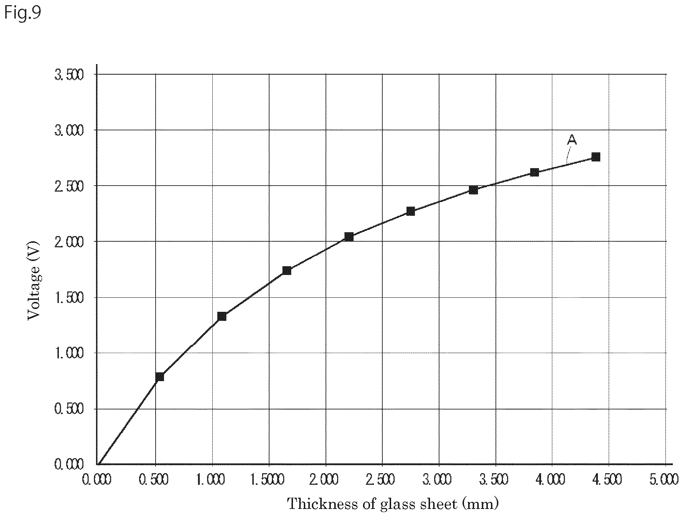

The electrostatic capacity detection circuit in the detector main body 40 outputs a voltage value V corresponding to the electrostatic capacity of the site to be subjected to wall thickness inspection, in other words, the site in contact with the sensor unit 5. The detection output is captured by the arithmetic and control unit 30 embedded in the device main body 3, and is converted to wall thickness data using the wall thickness conversion curves A shown in Fig. 9. The structure of an electrostatic capacity detection circuit and the step of converting the electrostatic capacity to wall thickness are well known to the public as shown in Patent Document 1 (Japanese patent No. 3416084), and thus the detailed description thereof is omitted here.

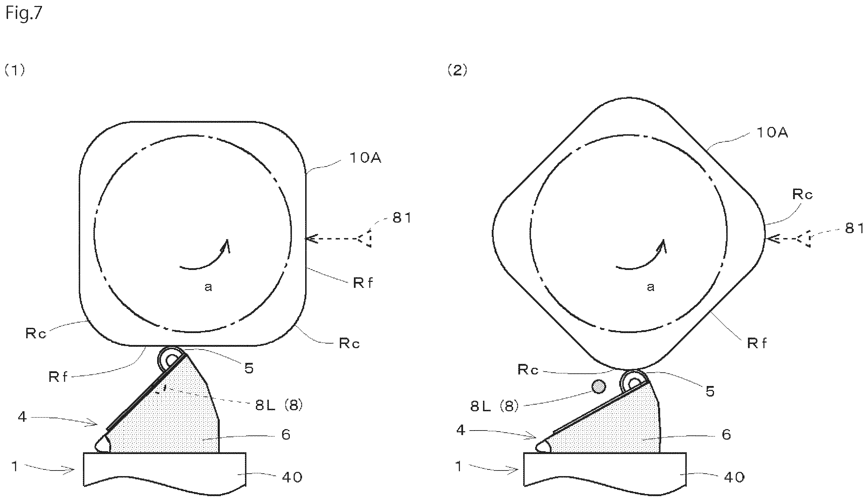

Among the upper and lower electrostatic capacity detectors 4, 4 shown in Fig. 1, a transmissive photoelectric sensor 8 is provided in the vicinity of the upper electrostatic capacity detector 4. A light-emitting unit 8a and a light-receiving unit 8b are vertically opposed to each other, and the elastic body 6 of the electrostatic capacity detector 4 is disposed between the light-emitting unit 8a and the light-receiving unit 8b. A light path 8L is formed between the light-emitting unit 8a and the light-receiving unit 8b. The light path 8L has a transmission state, which is shown in Fig. 7(2), and a blocking state, which is shown in Fig. 7(1), depending on the extension/compression of the elastic body 6. The photoelectric sensor 8 constitutes a region detection device for detecting which region of the bottle 10A corresponds to the wall thickness measurement site to be measured by the electrostatic capacity detector 4; more specifically, for detecting whether the site is a flat portion Rf or a corner portion Rc of the bottle 10A.

The photoelectric sensor 8 in the present embodiment is constituted of an optical fiber sensor. Although it is not shown in the figure, the light from a light-emitting element, such as an LED, is guided by a first optical fiber and is projected from the light-emitting unit 8a on the end surface. The projected light is received by a light-receiving element 8b on the end surface of a second optical fiber, and the received light is guided to a light-receiving element, such as a photodiode. The photoelectric sensor is not limited to a transmissive optical fiber sensor, but may be a different type of photoelectric sensor.

In the present embodiment, the photoelectric sensor 8 detects a predetermined amount of displacement during the reciprocating motion of the sensor unit 5 in contact with the outer peripheral surface of the bottle 10A based on the change between the blocking state and the transmission state of the light path, thereby detecting whether the wall thickness measurement site to be measured by the electrostatic capacity detector 4 is a flat portion Rf or a corner portion Rc of the bottle 10A. More specifically, the light-emitting unit 8a and the light-receiving unit 8b are positioned so that, when the sensor unit 5 is brought into contact with the flat portion Rf having a shorter distance from the center of the bottle 10A, thereby extending the elastic body 6, as shown in Fig. 7(1), the sensor unit 5 and the elastic body 6 block the light path 8L of the photoelectric sensor 8, thus turning the light path 8L into the blocking state. In contrast, when the sensor unit 5 is brought into contact with the corner portion Rc having a longer distance from the center of the bottle 10A, thereby contracting the elastic body 6, as shown in Fig. 7(2), the sensor unit 5 and the elastic body 5 open the light path 8L of the photoelectric sensor 8, thus turning the light path 8L into the transmission state. As a result, the photoelectric sensor 8 outputs a binary detection signal that is in an OFF state when the wall thickness of the flat portion Rf is measured by the electrostatic capacity detector 4, and is in an ON state when the wall thickness of the corner portion Rc is measured. Hereinafter, this output signal of the photoelectric sensor 8 is called a "corner detection signal."

Fig. 8 is a block diagram illustrating the electrical structure of the wall thickness inspection device 1 described above. The arithmetic and control unit 30 according to the present embodiment comprises a pair of inspection units 31, 31 corresponding to the pair of electrostatic capacity detectors 4, 4. Each inspection unit 31 comprises an A/D conversion circuit 33, a signal processing circuit 34 constituted of a FPGA (Field Programmable Gate Array), a CPU 35 constituting a determination device, and first and second storage units 36 and 37 for storing predetermined data. The structure of the comparison unit or the like constituting the above determination device may be embodied by the CPU 35 of a programmed computer as in this embodiment, or may also be embodied by a dedicated hardware circuit.

The number of inspection units 31 to be embedded in the arithmetic and control unit 30 is not limited to 2, and may be 3 or more. If the number of electrostatic capacity detectors 4 is less than the number of inspection units 31, only the inspection unit(s) 31 connected to the electrostatic capacity detector(s) 4 are activated. Further, although it is not shown in Fig. 8, the arithmetic and control unit 30 comprises a circuit for performing input and output with respect to a monitor unit 37 and key switch 38 shown in Fig. 1.

The voltage value showing the electrostatic capacity detected by each electrostatic capacity detector 4 is inputted to the A/D conversion circuit 33 of the corresponding inspection unit 31, sampled at a predetermined time interval, and is converted to a digital quantity. The signal processing circuit 34 captures the sampled electrostatic capacity data from the A/D conversion circuit 33, and converts the data to a value indicating wall thickness (hereinafter referred to as "wall thickness data") using a look-up table showing the wall thickness conversion curve A shown in Fig. 9.

In addition to the sampled electrostatic capacity data, a corner detection signal from the photoelectric sensor 8 and a gate signal from the upper control device (not shown) for the overall control of the inspection stations are inputted to the signal processing circuit 34. The gate signal in this embodiment is in a ON state during a time period required for the rotary drive mechanism 2 shown in Fig. 1 to rotate the bottle 10A about one and a half round.

In this embodiment, as shown in Fig. 1, the photoelectric sensor 8 is provided in the vicinity of only one of the electrostatic capacity detectors 4, and the corner detection signal of the photoelectric sensor 8 is inputted to each of the inspection units 31, 31 as a common signal. However, the present invention is not limited to this example. The photoelectric sensor 8 may be provided for each of the electrostatic capacity detectors 4 so that the corner detection signal from each photoelectric sensor 8 is inputted to a corresponding inspection unit 31.

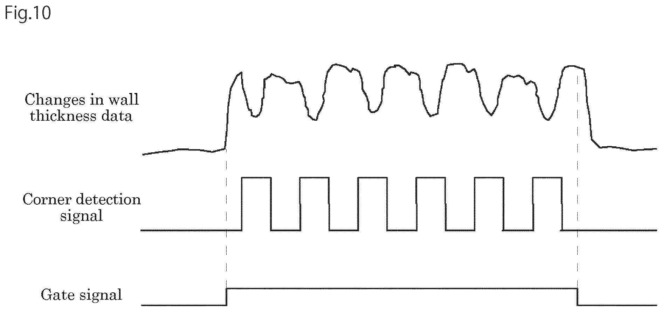

Fig. 10 is a time chart showing temporal changes in wall thickness data, together with a corner detection signal and a gate signal. The signal processing circuit 34 adds a single bit flag data indicating the ON/OFF of the corner detection signal to the wall thickness data obtained while the gate signal is ON, and stores it in the first storage unit 36. The flag data is "1" when the corner detection signal is ON, and "0" when the corner detection signal is OFF. When the gate signal turns from the ON state to the OFF state, the CPU 35 constituting the determination device processes the data stored in the first storage unit 36, thereby performing pass/fail determination regarding the wall thickness. When the wall thickness is determined as a failure by a CPU 35 of one of the inspection units 31, the CPU 35 that made the fail determination outputs an abnormal signal to the upper control device.

The determination result made by a CPU 35 of each inspection unit 31 is displayed in the monitor unit 37 of the device body 3, and is outputted to the personal computer (PC) 300. The personal computer 300 is used to confirm the determination results outputted from each inspection unit 31, and is also used to set the pass/fail determination standard values used for the inspection, or conditions regarding the correction of the ON period of the corner detection signal (described later) before the inspection in the CPU 35 of each inspection unit 31.

In the step of setting the pass/fail determination standard values, the person in charge of the inspection inputs a value indicating the minimum required wall thickness of the bottle 10A (hereinafter referred to as a minimum standard value) and a value indicating the maximum allowable wall thickness of the bottle 10A (hereinafter referred to as a maximum standard value) to the personal computer 300 as the pass/fail determination standard values based on the standard of the bottle 10A to be inspected. The inputted standard value is sent to each inspection unit 31 from the personal computer 300 and stored in the second storage unit 37 (not shown) via the CPU 35. In this embodiment, a maximum standard value, a first minimum standard value based on the standard of the wall thickness of the flat portion Rf, and a second minimum standard value based on the standard of the wall thickness of the corner portion Fc are stored in the second storage unit 37. Although the first and second storage units 36 and 37 are separately provided in the illustrated example, a single storage unit may be used.

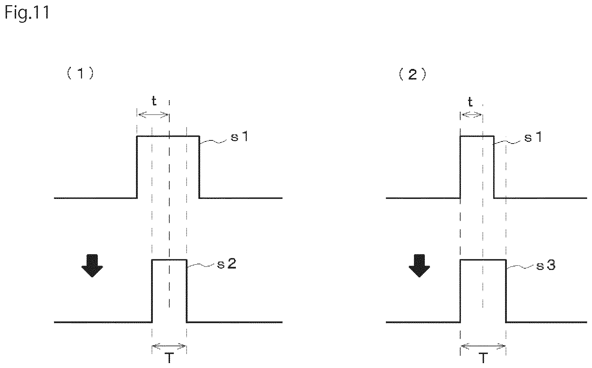

Further, the person in charge of the inspection performs wall thickness measurement using a sample of the bottle 10A to be inspected, confirms the length of the ON period of the corner detection signal of the photoelectric sensor 8 at this point, and adjusts the length of the ON period as necessary. Fig. 11 illustrates a specific example of the adjustment method. s1 is a corner detection signal of the photoelectric sensor 8, s2 is a signal corrected to have a shorter ON time T, and s3 is a signal corrected to have a longer ON time T. In this embodiment, a time point after a predetermined time t is elapsed from the rise of the corner detection signal s1 is determined as the center point. ON time T is determined based on this center point. The time t and ON time T are inputted from the personal computer 300 as correction parameters, sent from the personal computer 300 to each inspection unit 31, and stored in the second storage unit 37 via the CPU 35.

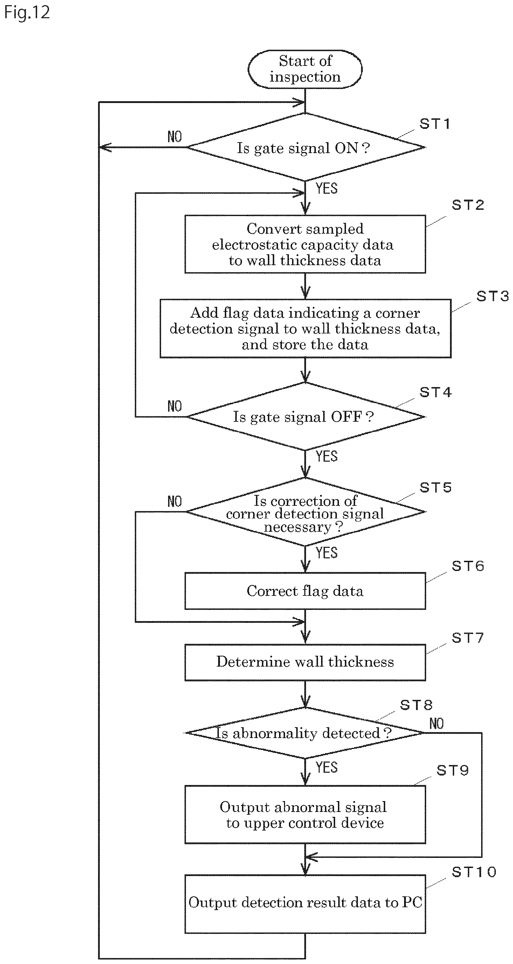

Fig. 12 shows the flow of the inspection process with respect to the square bottle 10A by the arithmetic and control unit 30. In the figure, "ST" is an abbreviation for "STEP" and shows each step in the inspection flow. Each step of the inspection flow shown in the figure is carried out by a single inspection unit 31. When a plurality of inspection units 31 are active, each inspection unit 31 individually carries out the steps of Fig. 12 in parallel.

In Fig. 12, ST1 to ST4 are carried out by the signal processing circuit 34 of the inspection unit 31. ST5 and later steps are carried out by the CPU 35. When the gate signal is in an ON state (YES in ST1), sampled electrostatic capacity data and a corner detection signal are captured by the signal processing circuit 34. The sample data is converted to wall thickness data (ST2). The flag data (0 or 1) indicating the corner detection signal captured at the same timing as that of the sample data is added to the wall thickness data, and is stored in the first storage unit 36 (ST3). This step is repeated until the gate signal is turned off, i.e., until it is judged as YES in ST4.

When the gate signal is turned off, it is judged as YES in ST4, and it is also judged as YES in ST5 if correction of the ON period of the corner detection signal is previously determined; then, the sequence goes to ST6. Before the wall thickness determination in ST7, in ST6, a step of correcting the ON time of the corner detection signal, more specifically, a step of correcting the flag data indicating a corner detection signal, is carried out. In this embodiment, as shown in Fig. 11, data correction is performed with respect to the flag data, which is added to the sample data and accumulated in the first storage unit 36, so that ON time T of the corrected signals s2 and s3 has a certain time period in which a time point after a predetermined Time t is elapsed from the rise of the corner detection signal s1 is the center point. Since the corner detection signal s1 is set based on the signal rise, the corner detection signal s1 cannot be corrected before the signal rise. Therefore, ON time T is expressed as T≤2t in which the center is the time point after t seconds.

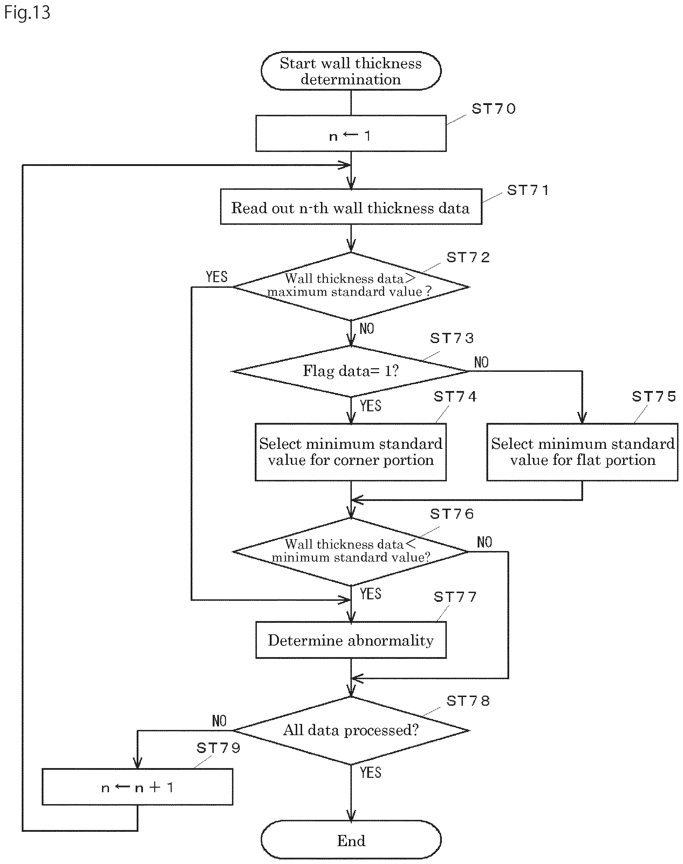

Fig. 13 shows the details of the wall thickness determination in ST7 shown in Fig. 12. In this step, an initial value 1 is set in a counter n (a register inside the CPU 35) for specifying the wall thickness data to be processed (ST70), and ST71 to 77 are carried out with respect to the n-th (n=1, in this case) wall thickness data.

In ST71, the CPU 35 reads out the n-th wall thickness data in which the flag data is added from the first storage unit 36 (ST71). Secondly, the comparison unit (a function of the CPU 35) of the CPU 35 compares the obtained wall thickness data with the maximum standard value stored in the second storage unit 37 (ST72). When the wall thickness data is determined to be not more than the maximum standard value, "NO" is selected in ST72, and the CPU 35 checks the value of the flag data added to the n-th wall thickness data (ST73).

When the flag data is "1," more specifically, when the n-th wall thickness data is a wall thickness measurement value of the corner portion Rc, it is judged as "YES" in ST73, and the CPU 35 selects the minimum standard value of the corner portion Rc from the second storage unit 37 (ST74). When the flag data is "0," more specifically, when the n-th wall thickness data is a wall thickness measurement value of the flat portion Rf, it is judged as "NO" in ST75, and the CPU 35 selects the minimum standard value of the flat portion Rf from the second storage unit 37 (ST75).

Next, the comparison unit of the CPU 35 compares the n-th wall thickness data with the selected minimum standard value. When the wall thickness data is determined to be less than the minimum standard value, it is judged as "YES" in ST76, and the CPU 35 determines that the n-th wall thickness data is an abnormal value (ST77).

When the n-th wall thickness data is determined to be greater than the maximum standard value in ST72, ST73 to 76 are omitted, and the CPU 35 carries out an abnormality determination step in ST77. If the n-th wall thickness data falls within a range of not less than the minimum standard value and not more than the maximum standard value, the wall thickness is determined to be normal, and ST77 is omitted.

Thereafter, the CPU 35 carries out the same step with respect to the n-th wall thickness data by incrementing the value of the counter n one by one (ST79). When the processing is completed for all data accumulated in the first storage unit 36, it is judged as "YES" in ST78, and the wall thickness determination is ended.

As described above, in the wall thickness determination in this embodiment, pass/fail determination is carried out with respect to all wall thickness data obtained during the ON period of the gate signal, and wall thickness data greater than the maximum standard value or wall thickness data less than the minimum standard value for each measurement site is determined to be an abnormal value.

Returning to Fig. 12, when abnormality is determined (ST77 in Fig. 13) in the wall thickness determination in ST7, it is judged as "YES" in ST8, and the CPU 35 outputs an abnormal signal to the upper control device (ST9) and further produces inspection results data and outputs the data to the personal computer 300 (ST10); thereafter, the sequence returns to ST1 to start inspecting the next bottle 10A.

In the procedure shown in Fig. 13, the loop of ST71 to 79 is repeated until the processing of all wall thickness data is completed even when an abnormality is determined midway through the step; however, it is also possible to end the loop when an abnormality is determined and immediately output an abnormal signal to the upper control device.

The inspection procedures shown in Figs. 12 and 13 are carried out to inspect the bottle 10A; however, the ellipse bottle 10B shown in Fig. 18 may also be inspected by similar procedures.

Further, by segmenting the corner detection signals, it becomes possible to specify a site of the outer peripheral surface of the bottle; therefore, the wall thickness determination may be performed using three or more minimum standard values.

In this embodiment, the detection as to whether the wall thickness measurement site to be measured by the electrostatic capacity detector 4 is a corner portion Rc or a flat portion Rf is performed by detecting a predetermined amount of displacement during the reciprocating motion of the sensor unit 5 associated with the extension/compression motion of the elastic body 6 using the photoelectric sensor 8; however, the detection of the measurement site is not limited to this method. For example, as shown by the dotted triangles in Figs. 7(1) and (2), it is possible to provide a displacement sensor 81 directed to a site 90° distant from the measurement site to be measured by the electrostatic capacity detector 4.

With this positioning, the displacement sensor 81 faces the same kind of region as that of the measurement site to be measured by the electrostatic capacity detector 4. More specifically, when the wall thickness of a flat portion Rf is measured, the displacement sensor 81 faces a flat portion Rf and measures the distance (Fig. 7(1)); when the wall thickness of a corner portion Rc is measured, the displacement sensor 81 faces a corner portion Rc and measures the distance (Fig. 7(2)). The displacement sensor 81 measures the distance to the surface of the bottle 10A, thereby obtaining a binary corner detection signal that is in an OFF state when the measurement value falls above the threshold and is in an ON state when the measurement value is equal to or less than the threshold.

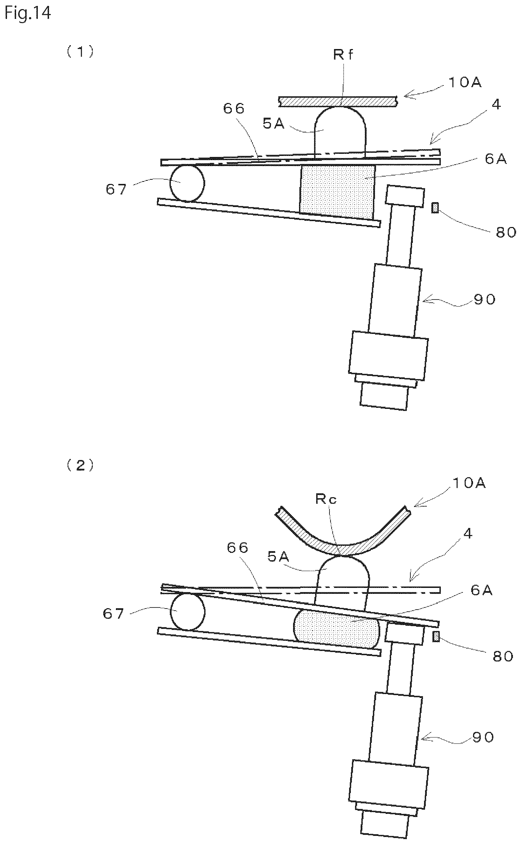

The electrostatic capacity detector 4 is not limited to that shown in Figs. 2 to 7; for example, an electrostatic capacity detector 4 having the structure shown in Fig. 14 may be used. In the figure, 5A is a sensor unit, 66 is an attachment substrate to which the sensor unit 5A is attached, 67 is a hinge mechanism, 6A is an elastic body, and 90 is a pressing mechanism. The attachment substrate 66 is capable of reciprocating motion with the hinge mechanism 67 as the fulcrum. A displacement sensor 80 is provided in a portion facing the attachment substrate 66 to measure the distance to the attachment substrate 66.

The electrostatic capacity detector 4 measures the wall thickness, and the displacement sensor 80 measures the distance to the attachment substrate 66. As in the above embodiment, a binary corner detection signal that is in an OFF state when the measurement value falls above the threshold (corresponding to the state in Fig. 14(1)) and in an ON state when the measurement value is equal to or less than the threshold (corresponding to the state in Fig. 14(2)) is outputted.

### Reference Numerals

1: wall thickness inspection device
2: rotary drive mechanism
3: device body
4: electrostatic capacity detector
5: sensor unit
6: elastic body
7: electrode sheet
8: photoelectric sensor
8a: light-emitting unit
8b: light-receiving unit
8L: light path
10A: square bottle
10B: ellipse bottle
30: arithmetic and control unit
31: inspection unit
35: CPU
36,37: storage unit
71: measurement electrode pattern
80, 81: displacement sensor

## Claims

1. A container wall thickness inspection device for inspecting a container in which regions with a relatively greater wall thickness and regions with a relatively smaller wall thickness are distributed in the circumferential direction,
the container wall thickness inspection device comprising:
a wall thickness measurement device with a sensor unit for measuring a wall thickness of a site facing the sensor unit on the outer peripheral surface of the container;
a rotary drive mechanism for axially rotating the container around the central axis of the container in order to measure a wall thickness of the container over the entire circumference by the wall thickness measurement device;
a region detection device for detecting which region of the container corresponds to the site being measured for its wall thickness by the wall thickness measurement device; and
a determination device for making a pass/fail determination with respect to the wall thickness of the container based on measured wall thickness values over the entire circumference of the container, which are obtained from output of the wall thickness measurement device,
wherein:
the determination device comprises a storage unit for storing a pass/fail determination standard value with respect to the wall thickness for each region, and a comparison unit for comparing each measured wall thickness value obtained from output of the wall thickness measurement device with a pass/fail determination standard value stored in the storage unit corresponding to the region detected by the region detection device.

2. The container wall thickness inspection device according to claim 1,
wherein:
the wall thickness measurement device comprises a sensor unit with an electrode pattern for measuring the electrostatic capacity of the container by being brought in contact with the outer peripheral surface of the container; and an elastic body for pushing the sensor unit onto the outer peripheral surface of the container, and
the region detection device detects a predetermined amount of displacement of the sensor unit during a reciprocating motion of the sensor unit along with an extension/compression motion of the elastic body, thereby detecting which region of the container corresponds to the site being measured for its wall thickness by the wall thickness measurement device.

3. The container wall thickness inspection device according to claim 1,
wherein:
the wall thickness measurement device comprises a sensor unit with an electrode pattern for measuring the electrostatic capacity of the container by being brought in contact with the outer peripheral surface of the container; and an elastic body for pushing the sensor unit onto the outer peripheral surface of the container,
the region detection device comprises a light-emitting unit and a light-receiving unit of a photoelectric sensor, which are oppositely positioned with the elastic body in the center, the light-emitting unit and the light-receiving unit of the photoelectric sensor being positioned so that a blocking state or a transmission state is formed in a light path between the light-emitting unit and the light-receiving unit by the predetermined amount of displacement of the sensor unit during the reciprocating motion of the sensor unit along with the extension/compression motion of the elastic body, and
the region detection device detects which region of the container corresponds to the site being measured for its wall thickness by the wall thickness measurement device by detecting which of the blocking state and the transmission state is being formed in the light path between the light-emitting unit and the light-receiving unit.
